## Europäisches Patentamt

## European Patent Office

## Office européen des brevets

(11) Veröffentlichungsnummer: **0 384 242**
**A1**

# EUROPÄISCHE PATENTANMELDUNG

(21) Anmeldenummer: **90102622.9**

(22) Anmeldetag: **10.02.90**

(51) Int. Cl.⁵: **C02F 9/00, C02F 1/52, B01D 21/00**

(30) Priorität: **23.02.89 DE 3905509**

(43) Veröffentlichungstag der Anmeldung:
**29.08.90 Patentblatt 90/35**

(84) Benannte Vertragsstaaten:
**AT BE CH DE DK ES FR GB IT LI LU NL SE**

(71) Anmelder: **BETEILIGUNGEN SORG GMBH & CO. KG**
**Postfach 520, Stoltestrasse 23**
**D-8770 Lohr am Main(DE)**

(72) Erfinder: **Reichert, Andreas, Dipl.-Ing.**
**Goltsteinstr. 39**
**D-5000 Köln 51(DE)**
Erfinder: **Hoberg, Heinz, Prof. Dr.-Ing.**
**Am Rosenhügel 21**
**D-5100 Aachen(DE)**

(74) Vertreter: **Zapfe, Hans, Dipl.-Ing.**
**Am Eichwald 7, Postfach 20 01 51**
**D-6056 Heusenstamm 2 (Rembrücken)(DE)**

(54) **Verfahren und Vorrichtung zum Aufbereiten von glashaltigem Kühlwasser.**

(57) Bei einem Verfahren und einer Vorrichtung zum Aufbereiten von in Glasfabriken anfallendem glashaltigem Kühlwasser wird nacheinander in einer Abscheidevorrichtung (9) das Kühlwasser von Kohlenwasserstoffen befreit und dem Kühlwasser mindestens ein primäres anorganisches Flockungsmittel aus der Gruppe der Metall-Chloride, -Sulfate und -Chloridsulfate zugesetzt. Man läßt danach das enstandene Gemisch bis zur Bildung von Mikroflocken in einer Konditioniervorrichtung (13) verweilen. Danach wird dem Kühlwasser mit den Mikroflocken ein Flockungshilfsmittel aus der Gruppe organischer Polymerer mit langkettigen Molekülen hoher Molekularmasse zusetzt, und man läßt das Gemisch bis zur Bildung von Makroflocken und deren Absetzung in einem Schlammsammelbehälter (21) einer Klärvorrichtung (16) verweilen. Nachfolgend zieht man die Überlaufmenge der Klärvorrichtung ab und führt den Schlamm aus dem Schlammsammelbehälter einer Filtervorrichtung (25) zu. Man zieht deren Filtrat ab und leitet schließlich den überwiegenden Teil der Summe der abgezogenen Massenströme der Überlaufmenge und des Filtrats über eine Kühlvorrichtung (30) in einen Kühlmittelkreislauf zu einer Berieselungsvorrichtung (3, 4) ein. Der verbleibende Teil der Massenströme wird zur Absalzung aus dem Kreislauf entfernt und die Massenstromverluste werden durch Frischwasser aufgefüllt.

FIG.6

## Verfahren und Vorrichtung zum Aufbereiten von glashaltigem Kühlwasser

Die Erfindung betrifft ein Verfahren zum Aufbereiten von bei der Herstellung von Glaserzeugnissen in Glasfabriken anfallendem mit geschmolzenem Glas in Berührung kommenden Kühlwasser, das durch den Abschreckprozeß mit splitterförmigen Glaspartikeln verunreinigt ist.

Bei der maschinellen Herstellung von Glas, insbesondere von Hohlglas tritt ständig ein Strom flüssigen Glases aus der Schmelzwanne aus. Dieser Strang wird mit Speisermessern auf die erforderliche Länge abgeschnitten. Die so erzeugten Tropfen gleiten auf wasserbenetzten Rinnen zu den Blasmaschinen.

Da die Speiseröffnungen der Schmelzwanne nicht verschlossen werden können, fallen bei der Wartung und Reinigung der Maschinen oder bei der Umstellung der Formen Glastropfen mit einer Temperatur von etwa 1.150 °C an, die nicht verarbeitet werden können und vor der Rückführung in den Produktionsprozeß abgekühlt werden müssen. Auch bei längeren Stillstandszeiten läuft ständig ein Faden flüssigen Glases aus, der abgelöscht werden muß.

Diese Abkühlung erfolgt in unterhalb der Produktionsmaschinen angeordneten, von Kühlwasser durchströmten Kratzerförderern. Neben der Ablöschung der Glasschmelze werden hier auch fehlerhafte Glaskörper, die bei der ersten Qualitätskontrolle ausgeschieden werden, aufgenommen und abgekühlt.

Aufgrund der schlagartigen Temperaturabsenkung des heißen Glases im Löschwasser bildet sich ein geringer Anteil sehr feinen Glasgruses, der nicht sedimentiert und über den Kratzer ausgetragen werden kann, sondern im abströmenden Kühlwasser verbleibt. Dieser Glasgrus enthält feinste Splitter, die wegen der amorphen Beschaffenheit nicht mit den herkömmlichen Sedimentationsverfahren abgetrennt werden können, da amorphe Teilchen andere Oberflächenpotentiale entwickeln wie beispielsweise Teilchen mit kristalliner Struktur.

Neben diesem Feststoffanteil gelangen mit dem Glas organische und anorganische Fremdstoffe in das Kühlwasser. In erster Linie sind dies Netzmittel und Schmierstoffe, die im Produktionsprozeß benötigt werden. Wegen der hohen Temperaturen der Glasschmelze werden für die Abkühlung erhebliche Mengen an Löschwasser benötigt. Da die Temperatur des Löschwassers zur Vermeidung der Dampfentwicklung auf Temperaturen unterhalb 40 °C begrenzt werden muß, sind zur Abkühlung einer Tonne Glasschmelze etwa 20 m³ Kühlwasser erforderlich. Beim gleichzeitigen Betrieb von zwei Schmelzwannen führt dies zu einem Bedarf von mehr als 60 m³ Wasser pro Stunde. Für derartige Wassermengen pro Zeiteinheit versagen die herkömmlichen Wasser-Aufbereitungsverfahren. In der Regel wird dieses Kühlwasser nach Abscheidung von Flüssigkeitsbeimengungen mit geringerem spezifischen Gewicht ungereinigt in die Kanalisation oder den Vorfluter geleitet.

Sowohl die Bereitstellung als auch die Entsorgung des Kühlwassers unterliegt ständig steigenden Kosten. Aus diesem Grunde ist es nicht mehr tolerierbar, Frischwasser als Kühlwasser zu verwenden und die Gesamtmenge dieses Kühlwassers in die Kanalisation oder einen Vorfluter einzuleiten.

Es wurde daher bereits versucht, das sogenannte "Scherben-Löschwasser" im Kreislauf zu führen. Dabei bestehen folgende Forderungen:

- Der Wärmeinhalt des Glases muß vom Löschwasser aufgenommen und an die Außenluft abgegeben werden (Rückkühlung).
- Feststoffe (Glasgrus etc.), die sich im Löschwasser anreichern, müssen abgeschieden werden.
- Organische und anorganische Fremdstoffe müssen soweit reduziert werden, daß eine Beeinträchtigung des Kühlprozesses und eine Schädigung der technischen Einrichtungen des Wasserkreislaufes verhindert werden.
- Ausgeschiedene Reststoffe müssen in eine Form gebracht werden, in der sie kostengünstig entsorgt werden können.

Es ist bereits bekannt, eine Feststoffabtrennung mit sogenannten Hydrozyklonen vorzunehmen. Dieses Verfahren ist jedoch mit erheblichen Nachteilen verbunden: Um bei der geringen Korngröße des Glases und den niedrigen Feststoffgehalten ausreichende Abscheidegrade zu erhalten, müssen bei normalen Hydrozyklonen Wasserverluste von bis zu 50 % im Zyklonunterlauf hingenommen werden.

Es ist weiterhin bekannt, für die Feststoffabtrennung Hydrozyklone mit Feststoff-Sammelkammern zu verwenden. Zwar kann der Wasserverlust mit diesen Hydrozyklonen deutlich verringert werden, jedoch haben Betriebserfahrungen in einer Glashütte gezeigt, daß es bei einer Anwendung dieser Geräte zu einer Anreicherung feinster Glaspartikel im Umlaufwasser kommt, die zu Ablagerungen auf den Austauscherflächen des Kühlturmes führten.

Durch die DE-A-36 02 325 ist es bereits bekannt, die beim Schleifen von Bleikristallgläsern anfallenden Abwässer zu reinigen, wobei hier nur derjenige Teil vergleichbar ist, der sich mit den Schleiferei-Abfällen befaßt. Hierbei entfällt zunächst einmal das Kühlen und Abschrecken von geschmolzenem Glas und damit die hohe Wärmebelastung des Kühlwassers, so daß - bezogen auf die verarbeitete Glasmenge - wesentlich weniger Wasser benötigt wird als bei einem Abschreckprozeß. Auch werden die Schleifpartikel beim Stand der Technik ohne den Zusatz besonderer Flockungsmittel und Flockungs-Hilfsmittel sedimentiert, weil nämlich ausdrücklich keine Fremdionen in das filtrierte Abwasser eingeführt werden sollen. Andererseits sollen die gelösten Blei- und Arsenverunreinigungen in einer dritten Stufe, die mit der zweiten Stufe in Reihe geschaltet ist, mittels einer Ionenaustauschbehandlung entfernt werden. Auch diese Behandlung ist nur für relativ geringe Wassermengen geeignet und im übrigen nicht in einer kontinuierlichen Betriebsweise durchführbar, weil nämlich die Ionenaustauscher in regelmäßigen Abständen regeneriert oder ausgetauscht werden müssen. Der Einsatz eines Ionenaustauschers ist die Ursache dafür, daß der Eintrag von Fremdionen vermieden werden muß. Außerdem muß dem Ionenaustauscher eine Mikrofiltrationsstufe vorgeschaltet werden. Andernfalls wäre ein Verstopfen bzw. Versagen des Harzbettes des Ionenaustauschers und ein völliges Versagen des Kreislaufs die Folge. Die weiterhin beschriebene Behandlung von Abwässern und Abgasen aus der Säurepolierbehandlung ist ein überwiegend chemischer Vorgang, dessen Endprodukt nicht zur Rückführung in den Kreislauf geeignet ist und der hierfür auch nicht vorgesehen ist.

Die Menge des pro Zeiteinheit im Kreislauf geführten Wassers ist ein wesentliches Kriterium für die Verfahrensführung, und für einen großen Wasserdurchsatz ist das bekannte Verfahren nicht geeignet. So liegt zum Beispiel die Obergrenze für den wirtschaftlichen Einsatz von Filtersäcken je nach der Beschaffenheit des Abwassers bei 1 bis 2 $m^3$ pro Tag. In Glasfabriken, für die das erfindungsgemäße Verfahren vorgesehen ist, fallen hingegen beim gleichzeitigen Einsatz von zwei Schmelzwannen, stündlich in der Regel mehr als 60 $m^3$ an Kühlwasser an.

Durch die DE-C-36 36 993 ist es bekannt, Abwässer aus sehr unterschiedlichen Prozessen in einem vielstufigen Verfahren aufzuarbeiten, zu dem auch der sequentielle Zusatz von Flockungsmitteln und Flockungshilfsmitteln gehört. Dabei werden zwischen den einzelnen Stufen Feststoffe wie Aktivkohle und Kieselgur zugesetzt, die im Ergebnis zusätzliche Verunreinigungen darstellen. Außerdem wird zu Beginn des Verfahrens eine Säure (Salzsäure) und im weiteren Verlaufe des Verfahrens eine Lauge (Kalziumhydroxid) zugesetzt, um die Säure wieder zu neutralisieren. Die daraus gebildeten Salze lassen sich durch eine Fällungsreaktion überhaupt nicht mehr ausscheiden. Aus den genannten Gründen ist das Verfahren auch nicht für einen Wasserkreislauf geeignet; vielmehr wird das aufbereitete Abwasser schließlich verworfen. Auch aus wirtschaftlichen Gründen kommt ein derartiges Verfahren schon wegen der hohen Kosten für die zuzugebenden großen Mengen an Kieselgur und Aktivkohle, die im Schlammprodukt verbleiben und damit verloren gehen, nicht in Betracht. Wie aus der Druckschrift hervorgeht, ist zur Erreichung einer optimalen Entwässerung eine solche Gesamtmenge an Kieselgur und Aktivkohle zuzugeben, daß der Anteil an Aktivkohle und Kieselgur im Feststoffgehalt des Schlamms etwa 30 % oder mehr beträgt.

Der Erfindung liegt daher die Aufgabe zugrunde, ein Aufbereitungsverfahren der eingangs beschriebenen Gattung anzugeben, bei dem erhebliche Mengen an Prozeßwasser und Abwasser eingespart werden, und bei dem dennoch eine lange Betriebsdauer der Aufbereitungsanlage gewährleistet ist.

Die Lösung der gestellten Aufgabe erfolgt bei dem eingangs angegebenen Verfahren erfindungsgemäß dadurch, daß man

a) in einem ersten Verfahrensschritt das Kühlwasser durch eine Abscheidevorrichtung für die Abtrennung von auf dem Wasser schwimmenden Kohlenwasserstoffen ("Leichtflüssigkeiten") leitet,

b) in einem zweiten Verfahrensschritt, dem von den Kohlenwasserstoffen befreiten Kühlwasser mindestens ein primäres anorganisches Flockungsmittel aus der Gruppe der Metall-Chloride, -Sulfate und -Chloridsulfate zusetzt und das entstandene Gemisch bis zur Bildung von Mikroflocken verweilen läßt,

c) in einem dritten Verfahrensschritt dem Kühlwasser mit den Mikroflocken nach Schritt b) ein Flockungshilfsmittel aus der Gruppe organischer Polymerer mit langkettigen Molekülen hoher Molekularmasse zusetzt und das Gemisch bis zur Bildung von Makroflocken und deren Absetzen in einem Schlammsammelbehälter einer Klärvorrichtung verweilen läßt und

d) nachfolgend die Überlaufmenge der Klärvorrichtung ohne Filterung abzieht und den Schlamm aus dem Schlammsammelbehälter einer Filtriervorrichtung zuführt und deren Filtrat abzieht und schließlich den überwiegenden Teil der Summe der abgezogenen Massenströme der Überlaufmenge und des Filtrats über eine Kühlvorrichtung in einen Kühlmittelkreislauf einleitet und den verbleibenden Teil der Massenströme zur Absalzung aus dem Kreislauf entfernt und die Massenstromverluste durch Frischwasser auffüllt.

Die Verwendung von Flockungsmitteln zum Sedimentieren von Feststoffen in Dispersionen ist zwar bereits bekannt (siehe "Der große Brockhaus", Kompaktausgabe, Band 7, 1983, Seiten 120, Stichwort "Flockung"). Allein, Versuche haben gezeigt, daß das Problem mit einem einfachen Flockungsvorgang nicht zu lösen ist. Dies soll anhand einiger Versuchsergebnisse wie folgt belegt werden:

An einer Produktionsanlage einer Glashütte wurden über einen längeren Zeitraum Proben von Scherben-Löschwasser entnommen, und zwar wurden über einen Zeitraum von 7 Tagen in Abständen von 6 Minuten Löschwassermengen von 0,1 l aus dem Löschwasserstrom entnommen und zu einer Sammelprobe vereinigt, aus der durch Teilung die einzelnen Analysenproben erzeugt wurden. Ein derartiges, typisches Analysenergebnis ist in Tabelle 1 zu finden. Dieser Tabelle ist zu entnehmen, daß das Löschwasser nur verhältnismäßig geringfügig mit Schadstoffen belastet ist. Fast alle Meßwerte der gelösten oder kolloidal verteilten Inhaltsstoffe liegen unterhalb der für Trinkwasser üblichen Grenzwerte. Lediglich der Gehalt an Tensiden überschreitet mit 0,69 mg/l den entsprechenden Grenzwert geringfügig.

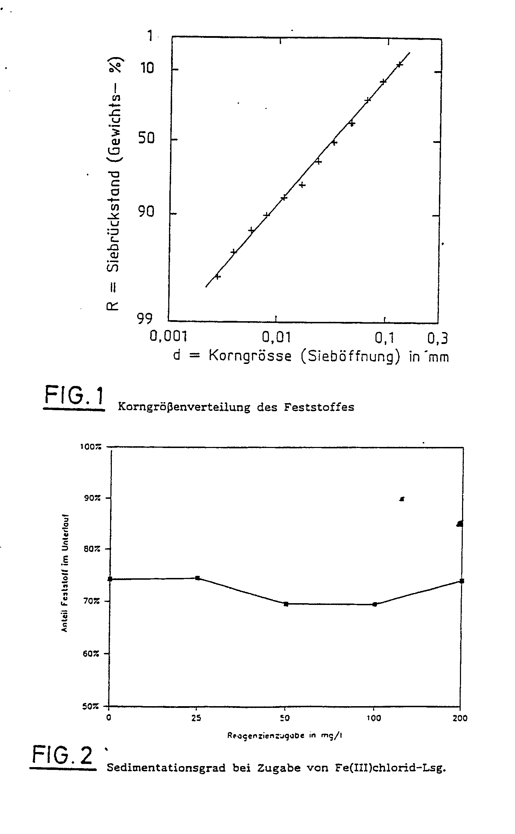

Der mittlere Feststoffgehalt des Löschwassers lag bei 160 mg/l. Die Korngrößenverteilung dieses Feststoffs wurde mit Hilfe des Laser-Beugungsverfahrens (Microtrac)ermittelt. Das Ergebnis ist in dem Diagramm gemäß Figur 1 dargestellt, in dem der Siebrückstand R in Gewichtsprozent über der Korngröße d dargestellt ist. Etwa 90 % des Feststoffes sind kleiner als 50 um ($50 \times 10^{-6}$ m) und 10 % kleiner als 10 um. Auch eine mikroskopische Begutachtung des Feststoffes zeigt, daß dieser ausschließlich aus feinen Glaspartikeln besteht.

Die einstufige Sedimentierung der Feststoffe mit herkömmlichen Flockungs- und Flockungshilfmitteln stieß jedoch auf erhebliche Probleme: Die gebildeten Mikroflocken weisen eine zu geringe Sedimentationsgeschwindigkeit auf, so daß unwirtschaftlich lange Verweilzeiten in Sedimentationsbehältern die Folge wären.

In den Figuren 2 bis 5 sind Diagramme dargestellt, in denen die Anteile an Feststoff im Unterlauf in Abhängigkeit von der Reagenzienkonzentration bzw. der Art der Flockungshilfsmittel dargestellt ist.

Zur Versuchsdurchführung wurde aus der vorstehend beschriebenen Sammelprobe jeweils eine Charge von 2 l entnommen. Diesen Chargen wurden die im einzelnen angegebenen Flokkungs- bzw. Flockungshilfsmittel zugesetzt. Eine intensive Vermischung und Konditionierung der Suspension erfolgt durch kräftiges Schütteln des Probengefässes, wobei die Konditionierzeit bei allen Versuchen 5 Minuten betrugt. Nach einer Sedimentationsdauer von gleichfalls 5 Minuten wurden die oberen 95 % des Inhalts, also 1.900 ml, mittels eines Stechhebers vorsichtig abgesaugt. Der Feststoffgehalt des so gewonnenen Ober- und Unterlaufs wurde durch Filtration, Trocknung und Wägung ermittelt. Der Sedimentationsgrad errechnet sich dann aus dem Quotienten des Feststoffgehalts der Sedimentationszone und des Feststoffgehalts der gesamten Probe.

Figur 2 zeigt den Sedimentationsgrad von Eisen-(III)-ChloridLösung in Abhängigkeit von der Konzentration in mg/l. Es zeigt sich, daß weitgehend unabhängig von der Konzentration der Sedimentationsgrad nur zwischen etwa 70 und 75 % liegt.

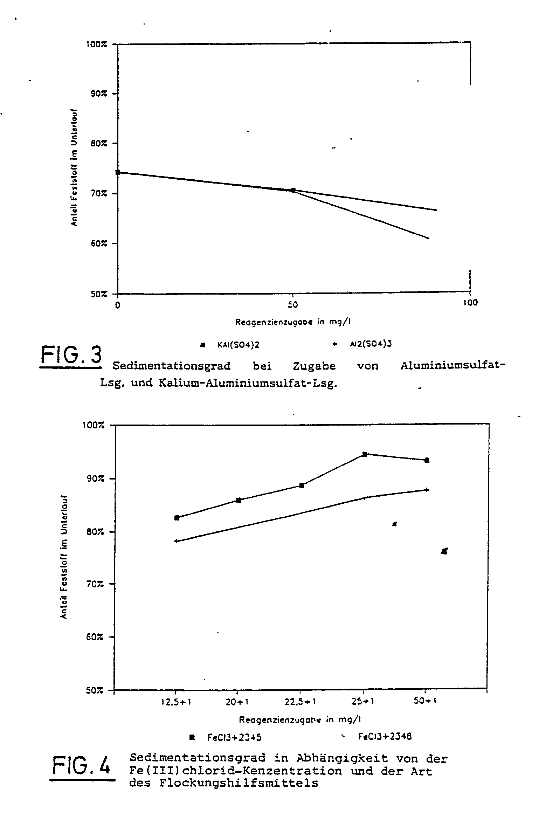

Figur 3 zeigt analoge Verhältnisse bei Verwendung von Aluminiumsulfat-Lösung und Kalium-Aluminium-Sulfat-Lösung als Flockungsmittel. Auch hier wird deutlich, daß die Sedimentationsgeschwindigkeiten durch alleinige Zugabe von Flockungsmitteln unbeschadet von deren Konzentration nicht ausreichend erhöht werden können. Im Gegenteil: Figur 3 zeigt deutlich, daß bei Zugabe von Aluminiumsulfat und Kalium-Aluminium-Sulfat der Sedimentationsgrad sich bei Erhöhung der Konzentration vermindert.

Figur 4 zeigt hingegen die Verhältnisse bei der zusätzlichen Verwendung von Flockungs-Hilfsmitteln aus der Gruppe der Copolymerisate aus Polyacrylamid und Polynatriumacrylat der Firma Stockhausen GmbH. Es wurden ein nichtionogenes Flokkungs-Hilfsmittel (Nummer 2345) und ein anionisches Flokkungs-Hilfsmittel (Nummer 2348) mit 15 % anionenaktiven Gruppen verwendet. Die Konzentrationen dieser Flockungs-Hilfsmittel betrugen gemäß Herstellerempfehlung 0,5 und 1,0 mg/l.

Es ist ersichtlich, daß die Sedimentationsgrade deutlich höher sind als bei den Versuchen ohne Flockungs-Hilfsmittel. Das nichtionogene Flockungs-Hilfsmittel führt dabei zu besseren Ergebnissen als das anionische. Ferner zeigte sich überraschend, daß in diesem Falle auch die Erhöhung der Eisen(III)-Chlorid-Konzentration zur deutlichen Verbesserung des Sedimentationsgrades führt. Bei einer Flockungsmittelkonzentration von 25 mg/l und Verwendung des nichtionogenen Flockungs-Hilfsmittels konnte ein optimaler Sedimentationsgrad von 94,4 % erreicht werden.

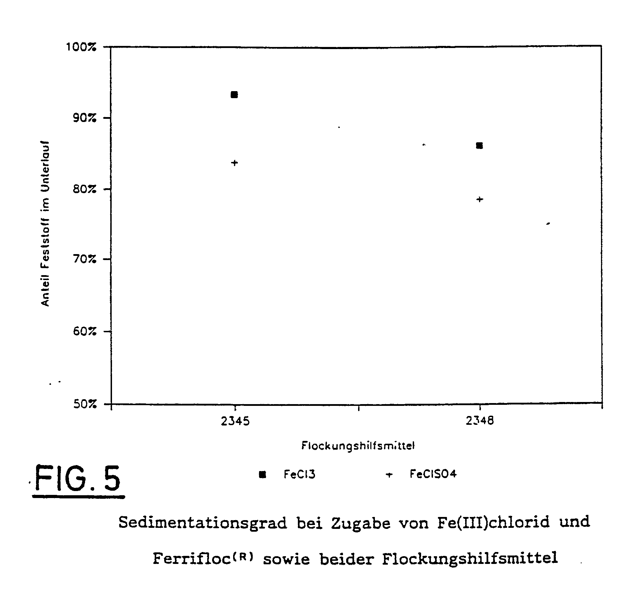

Figur 5 zeigt die Wirkung von Flockungsmitteln des Typs Eisen(III)chlorid und Ferrifloc[R] der Firma Kronos Titan GmbH in Verbindung mit den Flockungs-Hilfsmitteln Nummer 2345 und 2348 (siehe oben), und es ist deutlich zu erkennen, daß auch hier die Wirkung der anorganischen Flockungsmittel auf Eisenbasis durch die Flockungs-Hilfsmittel auf organischer Basis beträchtlich verbessert wird.

Ein weiteres wichtiges Kriterium für das Flockungsverfahren ist die Sinkgeschwindigkeit der Flocken. Es wurde beobachtet, daß sich bei optimaler Reagenzien-Kombination und -Konzentration für die langsamsten Flocken eine Sinkgeschwindigkeit von 50 mm/min einstellte.

Es wurde weiterhin überraschend festgestellt, daß der erfindungsgemäße Flockungsprozeß auch in der Lage ist, den Tensid-Gehalt des Kreislaufwassers zu reduzieren. So konnte beobachtet werden, daß der ursprüngliche Tensidgehalt von 0,69 mg/l (siehe Tabelle 1) auf 0,02 mg/l reduziert werden konnte.

Insgesamt konnte bei Anwendung des erfindungsgemäßen Verfahrens beobachtet werden, daß neben einem sehr hohen Sedimentierungsgrad auch eine Abscheidung bzw. Ausscheidung gelöster Inhaltsstoffe aus dem Kühlwasser erfolgte.

Bei dem erfindungsgemäßen Verfahren werden sowohl Kohlenwasserstoffe (Öl) als auch Glaspartikel durch Anwendung physikalischer Trennungsprozesse aus der wässrigen Phase entfernt. Dabei erübrigt sich wegen des geringen Gehalts des Abwassers an gelösten Metallsalzen die Anwendung eines Ionenaustauschers, so daß es möglich ist, auf eine Mikro-Filtrationsstufe zu verzichten. Dies setzt andererseits wieder voraus, daß es gelingt, in den Sedimentationsstufen durch entsprechenden Zusatz an Flockungsmitteln und Flockungshilfsmitteln eine äußerst weitgehende Sedimentation auch feinster Glasteilchen herbeizuführen. Hierbei ist es von Bedeutung, daß die. Feinheit dieser Teilchen im Mittel noch immer unterhalb der Partikelgröße liegt, die bei den üblichen Sedimentationsverfahren vorliegen. Auch spielt die amorphe Beschaffenheit der winzigen Glaspartikel eine entscheidende Rolle, da diese Partikel deutlich andere Oberflächeneigenschaften haben, als beispielsweise Partikel aus Metallen oder deren Oxiden.

Auch ist es wegen der großen Wassermenge pro Zeiteinheit von ganz entscheidender Bedeutung, daß erfindungsgemäß die Überlaufmenge der Klärvorrichtung, und daß nahezu die gesamte im Kreislauf umgewälzte Wassermenge, ohne Filterung abgezogen wird.

Das erfindungsgemäße Verfahren ist daher eine technisch und wirtschaftlich optimale Kombination von Trennverfahren unter Zugabe von Flockungsmitteln zur Erzeugung von Mikroflocken und anschließender Zugabe von Flockungshilfsmitteln, die eine Koagulation der Mikroflocken und damit eine schnelle Sedimentation bewirken.

Wie nachfolgend anhand eines Ausführungsbeispiels noch näher erläutert werden wird, ergab sich durch die erfindungsgemäße Kreislaufführung des Scherben-Löschprozesses eine ganz erhebliche Reduzierung der benötigten Prozeßwassermengen und des Abwasseranfalls. Beispielhaft konnte der Wasserverbrauch von 60 m³/h auf 2 m³/h, also um 97 % vermindert werden. Die Abwassermenge reduzierte sich dabei sogar um 98 % von 60 m³/h auf 1 m³/h. Bei einer Abwassergebühr von nur 1,-- DM/m³ vermindern sich dadurch die Abwasserkosten um 472.000,-- DM pro Jahr.

Besonders vorteilhafte Verfahrensparameter ergeben sich aus den übrigen Verfahrensansprüchen 2 bis 10.

Die Erfindung betrifft auch eine Vorrichtung zur Durchführung des Verfahrens nach Anspruch 1 in Verbindung mit einer eine Fördervorrichtung zum Sammeln von mindestens teilweise flüssigen Glasabfällen aufweisenden Maschinen für die Herstellung von Glasprodukten, wobei die Fördervorrichtung eine Berieselungsvorrichtung und einen Ablauf für teilweise im Kreislauf geführtes Kühlwasser aufweist.

Zur Lösung im wesentlichen der gleichen Aufgabe ist eine solche Vorrichtung erfindungsgemäß gekennzeichnet durch

a) eine an den Ablauf der Fördervorrichtung angeschlossene Abscheidevorrichtung für die Abtrennung von Kohlenwasserstoffen (Leichtflüssigkeiten),

b) eine der Abscheidevorrichtung nachgeschaltete, zur Bildung der Mikroflocken dienende Konditioniervorrichtung mit einer Dosiervorrichtung für die Einspeisung des anorganischen Flockungsmittels,

c) eine der Konditioniervorrichtung nachgeschaltete, zur Bildung der Makroflocken dienende Klärvorrichtung mit einer Dosiervorrichtung für die Einspeisung des organischen Flockungs-Hilfsmittels mit einem Überlauf, einem Schlammsammelbehälter und einem Bodenabzug,

d) eine dem Bodenabzug nachgeschaltete Filtervorrichtung mit einem Filtratabzug und durch

e) eine dem Überlauf und dem Bodenabzug nachgeschaltete Kühlvorrichtung, deren Kühlwasserausgang mit der Berieselungsvorrichtung der Fördereinrichtung verbunden ist.

Weitere vorteilhafte Ausgestaltungen einer solchen Vorrichtung ergeben sich aus den übrigen Vorrichtungsansprüchen 12 bis 16.

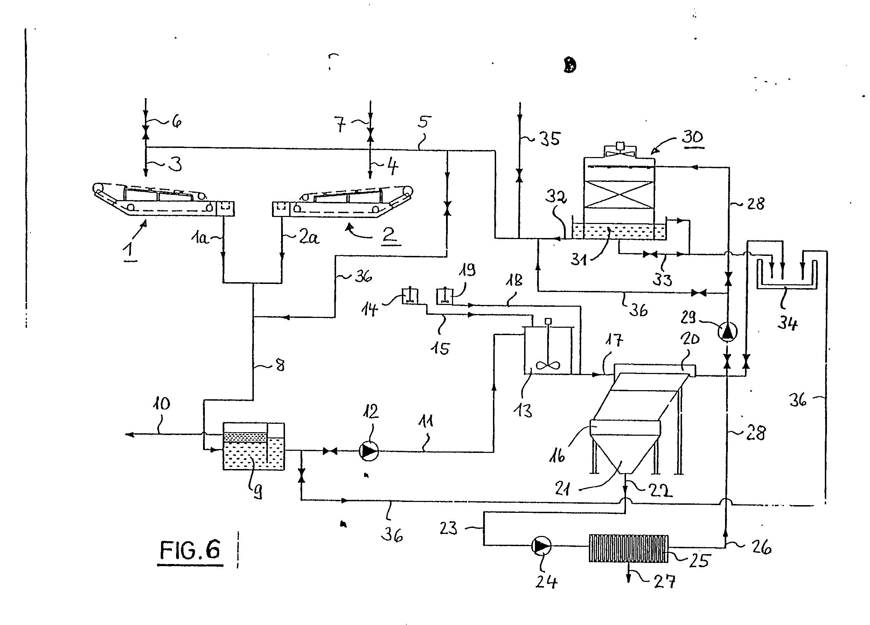

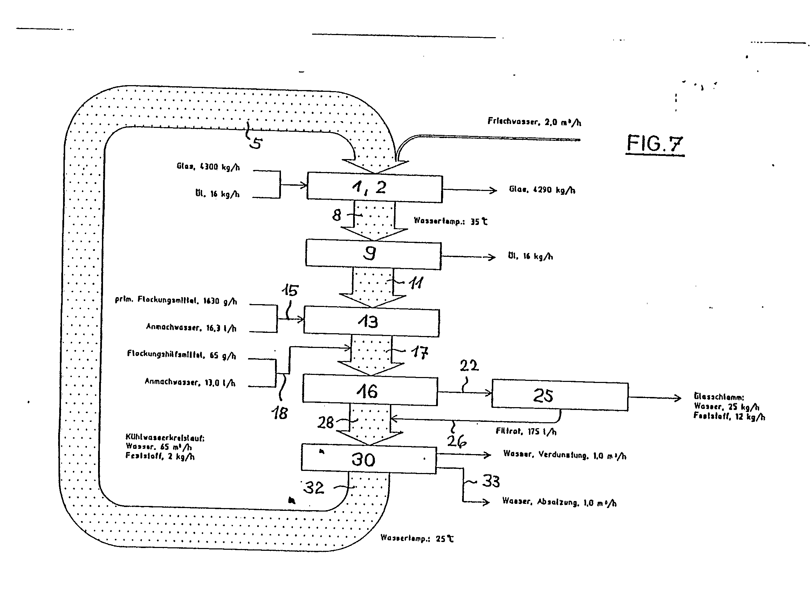

Ein Ausführungsbeispiel der erfindungsgemäßen Vorrichtung und das darin ausgeübte Verfahren werden nachfolgend unter besonderer Berücksichtigung der Figuren 6 und 7 näher erläutert. Dabei zeigt die Figur 6 das Verfahrensschema mit den entsprechenden Vorrichtungsteilen und Figur 7 das zugehörige Massenflußdiagramm des Kühlkreislaufes.

Bei der Vorrichtung nach Figur 6 sind zwei Kratzerförderer 1 und 2 vorgesehen, die in der Nähe je einer nicht gezeigten Schmelzwanne mit flüssigem Glas stehen und über denen je eine, hier nur schematisch angedeutete Berieselungsvorrichtung 3 und 4 angeordnet ist. Diese Berieselungsvorrichtungen werden über eine Leitung 5 mit im Kreislauf geführtem Kühlwasser versorgt. Zum Anfahren sowie zum Ersatz des durch Verdunstung und Absalzung dem Kreislauf entzogenen Kühlwassers sind Frischwasseranschlüsse 6 und 7 vorgesehen. Die Fördervorrichtungen 1 und 2 (Kratzerförderer) besitzen je einen Ablauf 1a bzw. 2a, die sich zu einer Sammelleitung 8 vereinigen. Die Sammelleitung 8 führt zu einer Abscheidevorrichtung 9 für die Abtrennung von Leichtflüssigkeiten (Ölphase). Die abgeschiedenen Leichtflüssigkeiten werden über eine Leitung 10 einem Verbrennungsvorgang, beispielsweise einer Schmelzwannenbeheizung,

5

zugeführt.

Von der Abscheidevorrichtung 9 führt eine Leitung 11 über eine Pumpe 12 zu einer Konditioniervorrichtung 13, die als Rührwerksmischer ausgebildet ist und der eine Dosiervorrichtung 14 für die Zumischung eines primären (anorganischen) Flockungsmittels über eine Leitung 15 aufgeschaltet ist. In der Konditioniervorrichtung 13 erfolgt die Bildung sogenannter Mikroflocken.

Der Konditioniervorrichtung 13 ist eine Klärvorrichtung 16 mittels einer Leitung 17 nachgeschaltet, in die die Anschlußleitung 18 einer weiteren Dosiervorrichtung 19 für die Einspeisung des organischen Flockungs-Hilfsmittels einmündet. In der Klärvorrichtung 16, die als sogenannter "Lamellenklärer" ausgebildet ist, erfolgt die Bildung von Makroflocken.

Die Klärvorrichtung 16 besitzt einen Überlauf 20, einen Schlammsammelbehälter 21 und einen Bodenabzug 22. Der Überlauf 20 ist unmittelbar, d.h. ohne Zwischenschaltung eines Filters, Ionenaustauschers oder dergleichen, über eine Leitung 28 und eine Pumpe 29 mit der Kühlvorrichtung 30 verbunden.

Dem Bodenabzug 22 ist über eine Leitung 23 und eine Pumpe 24 eine Filtervorrichtung 25 nachgeschaltet, die einen Filtratabzug 26 aufweist. Die Filtervorrichtung 25 ist als Kammerfilterpresse ausgebildet und besitzt einen Abzug 27 für den sogenannten Filterschlamm, der einer Deponie zugeführt wird.

Die sich an den Filtratabzug 26 anschließende Leitung 28 stellt eine Fortsetzung der Kreislaufleitung dar; sie führt über die Pumpe 29 zu der Kühlvorrichtung 30, die als Kühlturm ausgebildet ist. Der Kühlturm besitzt einen Sammelbehälter 31 mit einem Kühlwasserausgang 32, der wiederum in die bereits beschriebene Leitung 5 einmündet, die ihrerseits zu den Berieselungsvorrichtungen 3 und 4 der Fördereinrichtungen 1 und 2 führt. Damit ist der Kreislauf geschlossen.

Von dem Sammelbehälter 31 führt eine Abzugsleitung 33, die zur Absalzung dient, zu einer Kanalisation 34. In den Kühlwasserkreislauf mündet weiterhin eine Zufuhrleitung 35 für Frischwasser, durch die die Wasserverluste durch Verdunstung und Absalzung gleichfalls ausgeglichen werden können. Die Regelung der zugeführten Frischwassermenge erfolgt dabei zweckmäßig über eine Füllstandskontrolle im Sammelbehälter 31 der Kühlvorrichtung 30.

Die Anlage besitzt noch eine Reihe von Bypass-Leitungen 36, durch die der Betrieb bei Stillegung und Wartung einzelner Aggregate aufrechterhalten werden kann.

**Beispiel:**

In einer Anlage nach Figur 6 fielen an den Fördervorrichtungen 1 und 2 stündlich 4.300 kg abzukühlenden Glases an, von denen etwa 50 % aus flüssiger Glasschmelze mit einer Temperatur von 1.150 °C darstellten. Der Rest bestand aus aussortierten fehlerhaften Glaskörpern, die eine Temperatur von etwa 500 °C aufwiesen. Die umgewälzte Wassermenge betrug 65 m³ pro Stunde.

Nach dem Durchlauf durch die Abscheidevorrichtung 9 wurde das von 16 kg/h Leichtflüssigkeiten befreite Kühlwasser der Konditioniervorrichtung zugeführt, die eine solche Auslegung besaß, daß in ihr eine Verweilzeit von 3 Minuten erreicht wurde. Mittels der Dosiervorrichtung 14 wurden 1630 g/h einer 10%igen Eisen(III)chloridlösung zudosiert. Die Dosiervorrichtung 19 förderte 65 g/h eines polymeren Flockungs-Hilfsmittels in die Leitung 17. In der Klärvorrichtung 16 wurde durch deren Auslegung eine Turbulenz eingestellt, die für ein Flockenwachstum gerade ausreichte, andererseits aber nicht so stark war, daß die gebildeten Flocken wieder zerstört worden wären.

Der sich im Schlammsammelbehälter 21 absetzende Dünnschlamm wies einen Feststoffgehalt von etwa 5 Gewichtsprozent auf. Um ihn deponierfähig zu machen, wurde er in der Filtervorrichtung 25 auf einen Feststoffgehalt von etwa 40 % entwässert. Pro Tag fielen etwa 840 kg dieses Schlammes an. Die in der Kühlvorrichtung 30 durch Verdunstung und Tröpfchenverluste verlorengegangene Wassermenge betrug etwa 1,5 % des Durchsatzes, also etwa 1 m³/h. Die Absalzmenge an Kühlwasser betrug gleichfalls etwa 1 m³/h. Daraus ergab sich die Notwendigkeit, dem Kreislauf eine Frischwassermenge von 2 m³/h zuzuführen.

Bei dem beschriebenen Beispiel lag die Rücklauftemperatur des Kühlwasserkreislaufs bei 25 °C, die Vorlauftemperatur bei 35 °C.

Die vorstehend beschriebenen Verfahrensparameter sind einschließlich weiterer Daten, darunter der zudosierten Mengen an Flockungsmitteln und Flockungshilfsmitteln in Figur 7 wiedergegeben.

Tabelle 1:

| ph-Wert | 8,2 | Sulfat | 170,0 mg/l |
|---|---|---|---|
| Leitfähigkeit | 975,0 µS/cm | Sulfid | 0,05 mg/l |
| CSB | 9,3 mg/l | Nickel | 0,036 mg/l |
| $BSB_5$ | 0,8 mg/l | Blei | 0,04 mg/l |
| Ammonium | 0,12 mg/l | Mangan | 0,013 mg/l |
| Nitrat | 10,4 mg/l | Cadmium | 0,005 mg/l |
| Nitrit | 0,54 mg/l | Eisen | 0,005 mg/l |
| ges. Härte | 25,7 °dH | extrah.St. | 1,23 mg/l |
| Tenside | 0,69 mg/l | Quecksilber | 0,0005 mg/l |
| Fremdstoffgehalte im Scherbenlöschwasser | | | |

**Ansprüche**

1. Verfahren zum Aufbereiten von bei der Herstellung von Glaserzeugnissen in Glasfabriken anfallendem mit geschmolzenem Glas in Berührung kommendem Kühlwasser, das durch den Abschreckprozeß mit splitterförmigen Glaspartikeln verunreinigt ist, **dadurch gekennzeichnet,** daß man

a) in einem ersten Verfahrensschritt das Kühlwasser durch eine Abscheidevorrichtung für die Abtrennung von auf dem Wasser schwimmenden Kohlenwasserstoffen leitet,

b) in einem zweiten Verfahrensschritt dem von den Kohlenwasserstoffen befreiten Kühlwasser mindestens ein primäres anorganisches Flockungsmittel aus der Gruppe der Metall-Chloride, -Sulfate und -Chloridsulfate zusetzt und das entstandene Gemisch bis zur Bildung von Mikroflocken verweilen läßt, und

c) in einem dritten Verfahrensschritt dem Kühlwasser mit den Mikroflocken nach Schritt b) ein Flokkungs-Hilfsmittel aus der Gruppe organischer Polymerer mit langkettigen Molekülen hoher Molekularmasse zusetzt und das Gemisch bis zur Bildung von Makroflocken und deren Absetzung in einem Schlammsammelbehälter einer Klärvorrichtung verweilen läßt, und

d) nachfolgend die Überlaufmenge der Klärvorrichtung ohne Filterung abzieht und den Schlamm aus dem Schlammsammelbehälter einer Filtervorrichtung zuführt und deren Filtrat abzieht und schließlich den überwiegenden Teil der Summe der abgezogenen Massenströme der Überlaufmenge und des Filtrats über eine Kühlvorrichtung in einen Kühlmittelkreislauf einleitet und den verbleibenden Teil der Massenströme zur Absalzung aus dem Kreislauf entfernt und die Massenstromverluste durch Frischwasser auffüllt.

2. Verfahren nach Anspruch 1, **dadurch gekennzeichnet,** daß man pro Tonne Glasschmelze zwischen 15 und 50 m² Kühlwasser verwendet.

3. Verfahren nach Anspruch 1, **dadurch gekennzeichnet,** daß man das Kühlwasser auf die auf einer Fördervorrichtung befindlichen Glasabfälle leitet.

4. Verfahren nach Anspruch 1, **dadurch gekennzeichnet,** daß man als anorganisches Flockungsmittel ein solches aus der Gruppe Eisen(III)chlorid ($FeCl_3$), Aluminiumsulfat ($Al_2(SO_4)_3$), Kaliumaluminiumsulfat ($KAl(SO_4)_2$), Eisen(III)chloridsulfat ($FeClSO_4$) verwendet.

5. Verfahren nach Anspruch 4, **dadurch gekennzeichnet,** daß man die Konzentration der anorganischen Flockungsmittel während der Mikroflockenbildung auf Werte zwischen 10 und 200 mg/l Kühlwasser einstellt.

6. Verfahren nach Anspruch 1, **dadurch gekennzeichnet,** daß man als organische Flockungs-Hilfsmittel Polymerisate und Copolymerisate aus der Gruppe Polyacrylamid und Polynatriumacrylat verwendet.

7. Verfahren nach Anspruch 6, **dadurch gekennzeichnet,** daß man als organische Flockungs-Hilfsmittel nichtionogene und anionische Mittel verwendet.

8. Verfahren nach Anspruch 6, **dadurch gekennzeichnet,** daß man die Konzentration der organischen Flockungs-Hilfsmittel während der Makroflockenbildung auf Werte zwischen 0,2 und 5,0 mg/l, vorzugsweise auf Werte zwischen 0,5 und 1,5 mg/l Kühlwasser einstellt.

9. Verfahren nach Anspruch 1, **dadurch gekennzeichnet,** daß man das Ausflocken bei Temperaturen zwischen 20 und 40 °C, vorzugsweise zwischen 25 und 35 °C durchführt.

10. Verfahren nach Anspruch 1, **dadurch gekennzeichnet,** daß man den Überlauf der Klärvorrichtung

7

und das Filtrat der Filtervorrichtung einem Verdunstungskühlturm zuführt und das zusätzlich durch Verdunstung verloren gegangene Kühlwasser durch Frischwasser auffüllt.

11. Vorrichtung zur Durchführung des Verfahrens nach Anspruch 1 in Verbindung mit einer eine Fördervorrichtung zum Sammeln von mindestens teilweise flüssigen Glasabfällen aufweisenden Maschine für die Herstellung von Glasprodukten, wobei die Fördervorrichtung eine Berieselungsvorrichtung und einen Ablauf für teilweise im Kreislauf geführtes Kühlwasser aufweist, **gekennzeichnet durch**

a) eine an den Ablauf (1a, 2a) der Fördervorrichtung (1, 2) angeschlossene Abscheidevorrichtung (9) für die Abtrennung von Kohlenwasserstoffen,

b) eine der Abscheidevorrichtung (9) nachgeschaltete, zur Bildung der Mikroflocken dienende Konditioniervorrichtung (13) mit einer Dosiervorrichtung (14) für die Einspeisung des anorganischen Flokkungsmittels,

c) eine der Konditioniervorrichtung (13) nachgeschaltete, zur Bildung der Makroflocken dienende Klärvorrichtung (16) mit einer Dosiervorrichtung (19) für die Einspeisung des organischen Flokkungs-Hilfsmittels mit einem Überlauf (20), einem Schlammsammelbehälter (21) und einem Bodenabzug (22),

d) eine dem Bodenabzug (22) nachgeschaltete Filtervorrichtung (25) mit einem Filtratabzug (26) und durch

e) eine dem Überlauf (20) und dem Bodenabzug (22) nachgeschaltete Kühlvorrichtung (30), deren Kühlwasserausgang (32) mit der Berieselungsvorrichtung (3, 4) der Fördereinrichtung (1, 2) verbunden ist.

12. Vorrichtung nach Anspruch 11, **dadurch gekennzeichnet,** daß die Konditioniervorrichtung (13) als Behälter mit einer Rührvorrichtung ausgebildet ist.

13. Vorrichtung nach Anspruch 11, **dadurch gekennzeichnet,** daß die Klärvorrichtung (16) als Lamellenklärvorrichtung ausgebildet ist.

14. Vorrichtung nach Anspruch 11, **dadurch gekennzeichnet,** daß die Filtervorrichtung (25) als Kammerfilterpresse ausgebildet ist.

15. Vorrichtung nach Anspruch 11, **dadurch gekennzeichnet,** daß die Kühlvorrichtung (30) als Verdunstungskühlturm mit einem Sammelbehälter (31) ausgebildet ist.

16. Vorrichtung nach Anspruch 11, **dadurch gekennzeichnet,** daß der Kühlwasserkreislauf eine Abzugsleitung (33) für die Absalz-Wassermenge und eine Zufuhrleitung (35) für Frischwasser aufweist.

## FIG. 1

Korngrößenverteilung des Feststoffes

## FIG. 2

Sedimentationsgrad bei Zugabe von Fe(III)chlorid-Lsg.

FIG. 3   Sedimentationsgrad bei Zugabe von Aluminiumsulfat-Lsg. und Kalium-Aluminiumsulfat-Lsg.

FIG. 4   Sedimentationsgrad in Abhängigkeit von der Fe(III)chlorid-Kenzentration und der Art des Flockungshilfsmittels

FIG. 5

Sedimentationsgrad bei Zugabe von Fe(III)chlorid und

Ferrifloc[R] sowie beider Flockungshilfsmittel

**FIG.6**

EP 0 384 242 A1

FIG.7

Frischwasser, 2,0 m³/h

Glas, 4300 kg/h

Öl, 16 kg/h

1, 2 → Glas, 4290 kg/h

8 → Wassertemp.: 35 °C

9 → Öl, 16 kg/h

11

prim. Flockungsmittel, 1630 g/h

Anmachwasser, 16,3 l/h

15

13

17

Flockungshilfsmittel, 65 g/h

Anmachwasser, 13,0 l/h

18

16 → 22 → 25 → Glasschlamm:
Wasser, 25 kg/h
Feststoff, 12 kg/h

28

26 → Filtrat, 175 l/h

Kühlwasserkreislauf:
Wasser, 65 m³/h
Feststoff, 2 kg/h

30 → Wasser, Verdunstung, 1,0 m³/h

32

33 → Wasser, Absalzung, 1,0 m³/h

Wassertemp.: 25 °C

EP 0 384 242 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CHEMICAL ABSTRACTS, Band 102, Nr. 8, 25. Februar 1985, Seite 296, Zusammenfassung Nr. 66812x, Columbus, Ohio, US; F.E. FLEER: "Glass container plant wastewater treatment", & TECH. PAP. FED. CONV., AUST. WATER WASTEWATER ASSOC., 10TH 1983, 49/1-49/13 * Seite 49-1, summary; Seite 49-3, Absatz 2.2.2: "Cullet water"; Seite 49-5, Absatz 3.1: "Wasterwater flow"; Seite 49-12, Absatz 6: "Case studies - Japan", 6.1 "Coagulation / Sedimentation"; Seite 49-13, Absatz 7: "Conclusions" * | 1,4 | C 02 F   9/00 C 02 F   1/52 B 01 D   21/00 |
| A | IDEM | 11 | |
| A | CHEMICAL ABSTRACTS, Band 88, Nr. 24, 12 Juni 1978, Seite 396, Zusammenfassung Nr. 176567w, Columbus, Ohio, US; J. BARTEL et al.: "Treatment of glass plant effluents", & SZKLO CERAM. 1977, 28(11), 281-4 | 1,11 | |
| A | US-A-3 171 804  (A.H. RICE) * Spalte 7, Ansprüche 1-3; Spalte 3, Zeile 71 - Spalte 4, Zeile 24 * | 1,4,6,7 | RECHERCHIERTE SACHGEBIETE (Int. Cl.5) C 02 F |
| A | DE-A-2 651 483  (KIRTON ENGINEERING) * Spalte 1, Ansprüche 1,6,9-11 * | 1,6,7, 13 | |

Der vorliegende Recherchenbericht wurde für alle Patentansprüche erstellt

| Recherchenort | Abschlußdatum der Recherche | Prüfer |
|---|---|---|
| DEN HAAG | 17-05-1990 | TEPLY J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsatze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)